# FASCICULE DE BREVET EUROPEEN

(11) **EP 2 085 943 B1**
(45) Date de publication et mention de la délivrance du brevet: **15.02.2012**
(21) Numéro de dépôt: 08021727.6
(22) Date de dépôt: 15.12.2008
(51) Int. Cl.: G08C 17/04, B60C 23/04

(54) **Procédé de détection du déplacement d'un véhicule et dispositif correspondant**
Verfahren zur Erfassung der Bewegung eines Fahrzeugs und entsprechende Vorrichtung
Method for detecting the movement of a vehicle and corresponding device

(30) Priorité: 30.01.2008 FR 0800479
(43) Date de publication de la demande: 05.08.2009
(73) Titulaire: Continental Automotive France, 31100 Toulouse (FR)
(72) Inventeur: Vassilieff, Youri, 31400 Toulouse (FR)

(56) Documents cités:
- EP-A- 1 669 221
- EP-A- 1 669 222
- EP-A- 1 800 913
- FR-A- 2 856 145

## Description

La présente invention se rapporte au domaine de l'automobile. Plus particulièrement, l'invention concerne un procédé de détection d'un déplacement d'un véhicule et un dispositif correspondant, mis en oeuvre en association avec un système de surveillance de la pression des pneus.

Classiquement, pour réaliser la surveillance de la pression des pneumatiques d'une roue de véhicule, chaque roue est équipée d'une unité roue. Cette unité roue est par exemple fixée sur la valve du pneumatique et est plaquée contre la jante à l'intérieur du pneu.

De manière connue, chaque unité roue comporte au moins un capteur de pression apte à surveiller la pression régnant à l'intérieur du pneumatique. Les informations relatives à la pression sont ensuite envoyées, grâce à un moyen de communication sans fil vers une unité centrale située à l'intérieur du véhicule. Les mesures de pression sont analysées et traitées par cette unité centrale.

Afin de traiter avec une fréquence plus élevée les informations en provenance des capteurs de pressions lorsque le véhicule est en déplacement, il est connu de munir les véhicules d'un capteur de déplacement. En effet le traitement rapide d'une information de défaut de pression est primordial si le véhicule se déplace. Lorsque le véhicule est à l'arrêt le traitement de cette information n'est pas aussi urgent. Il est habituel de traiter les informations en provenance du système de surveillance de la pression des pneus selon deux rythmes distincts en fonction du fait que le véhicule se déplace ou non.

Pour déterminer si le véhicule roule ou bien est à l'arrêt, il est habituel d'équiper au moins une unité roue d'un moyen de détection de déplacement du véhicule. Avantageusement, les informations obtenues par le moyen de détection de déplacement, monté dans la roue sont transmises grâce au même moyen de communication sans fil que celui utilisé pour la pression des pneus. Ces informations sont analysées par l'unité centrale.

Il est également connu d'équiper le véhicule d'un dispositif de détection de déplacement indépendant de l'unité roue. Cependant, cette solution est peu avantageuse en termes de coûts.

Un moyen de détection de déplacement connu est, par exemple, constitué d'un accéléromètre monté dans l'unité roue. En effet l'accélération subie par une roue est directement fonction de la rotation (ou non) de cette roue. Cependant, les accéléromètres sont très sensibles aux variations de température. De ce fait il est nécessaire de réaliser une compensation en température afin de corriger les mesures de l'accéléromètre, ce qui les rend onéreux à mettre en oeuvre et complexe.

Pour détecter rapidement la mise en mouvement du véhicule, l'unité centrale surveille régulièrement les informations en provenance de l'unité roue. Cette surveillance et le traitement des données correspondantes sont effectués environ toutes les 10 secondes, véhicule à l'arrêt ou non. De ce fait, il existe un risque de décharger prématurément la batterie du véhicule dès lors que celui-ci reste longtemps immobilisé. L'emploi d'un accéléromètre en tant que moyen de détection du déplacement d'un véhicule se révèle être un moyen onéreux et peu économe en énergie.

Pour, détecter le déplacement d'un véhicule, il est également connu d'équiper au moins une unité roue d'un capteur de champ magnétique terrestre, comme par exemple, une bobine électromagnétique, particulièrement peu coûteuse. EP 1 669 221 divulgue un tel procédé et systéme en accord avec les préambules respectifs des revendications 1 et 5. En effet, lorsque le véhicule est à l'arrêt, le champ magnétique terrestre mesuré par l'unité roue est sensiblement constant. Par contre lorsque le véhicule est en déplacement, les roues sont entrainées en rotation et le capteur magnétique situé dans la roue détecte des variations du champ magnétique terrestre. Il est ainsi aisé de déterminer si le véhicule est en déplacement ou non en surveillant simplement si le capteur de champ magnétique détecte des variations du champ magnétique ou non.

Malheureusement, il existe de nombreux signaux parasites pouvant être interprétés par l'unité roue comme étant une indication d'une mise en mouvement du véhicule. En effet, lorsque le véhicule est à l'arrêt près d'un générateur de signaux parasites, le capteur magnétique peut être sensible à ces signaux parasites et envoyer un signal vers le micro processeur de l'unité roue (en croyant qu'il s'agit d'une mesure effective du déplacement du véhicule) alors qu'en fait il ne s'agit que d'une perturbation du champ magnétique due à un générateur parasite. Dans ce cas l'unité centrale montée dans le véhicule est amenée à traiter ce signal parasite. Dans le meilleur des cas elle peut se rendre compte, après traitement, qu'il s'agit d'un signal parasite et ne pas en tenir compte. Mais elle peut tout aussi bien ne pas s'en rendre compte et envoyer une information erronée vers le conducteur. Dans les deux cas, elle dépense inutilement de l'énergie pour effectuer le traitement du signal parasite et risque ainsi de décharger la batterie du véhicule.

Les générateurs de signaux parasites, pour les capteurs magnétiques, sont en fait relativement fréquents et sont d'autant plus perturbateurs que le véhicule est à l'arrêt. En effet dans ce cas le générateur perturbe en continu les moyens de détection de déplacement et l'unité centrale du véhicule n'en finit pas de traiter inutilement des signaux qui n'ont rien à voir avec le déplacement du véhicule. De tels générateurs peuvent par exemple être constitués par une machine à laver ou un réfrigérateur placé dans un garage à coté du véhicule. Il peut également s'agir d'ondes électromagnétiques dues à la proximité d'une prise électrique (220V à 50 Hz ou à 60 Hz). Le véhicule peut également être perturbé à l'arrêt s'il est garé près d'un transformateur électrique, près d'une ligne à haute tension, à proximité d'un tramway...etc... Dans le cas d'un tramway, par exemple, le champ magnétique induit est un champ variable aux alentours de 16Hz. Un tel champ peut être interprété, de manière erronée, comme étant lié au déplacement du véhicule à une vitesse de 110 km/h.

Le but de la présente invention est de proposer un procédé de détection du déplacement d'un véhicule au moyen d'au moins un capteur de champ magnétique terrestre et un dispositif correspondant permettant d'éliminer les analyses inutiles de signaux dus à des champs parasites.

A cet effet le procédé de détection du déplacement d'un véhicule selon l'invention consiste à:
- équiper au moins une unité roue d'un véhicule d'un moyen de détection de déplacement, générant un signal de déplacement lorsque le véhicule est en mouvement,
- établir un ensemble de caractéristiques de signaux parasites mémorisés dans l'unité roue,
- comparer chaque signal de déplacement (en provenance du capteur de déplacement) de l'unité roue avec l'ensemble des signaux parasites mémorisés, et
- envoyer vers l'unité centrale du véhicule que les signaux non présents dans l'ensemble des signaux parasites.

Plus particulièrement la présente invention propose préalablement à l'étape d'envoi du signal vers l'unité centrale de vérifier que ce signal est représentatif d'un déplacement réel du véhicule. Ainsi les signaux parasites ne sont plus analysés inutilement par l'unité centrale.

Selon un premier mode de mise en oeuvre du procédé selon l'invention, on utilise, en tant que capteur de déplacement, un seul capteur magnétique dans l'unité roue et on vérifie que la variation de champ magnétique mesurée par ce capteur est bien représentative d'un déplacement du véhicule en s'assurant par exemple que la vitesse de rotation de la roue (telle que déduite de la fréquence nominale du champ magnétique) correspond à une vitesse de roue plausible. Par exemple on vérifie qu'il n'y a pas de changement trop brusque de la valeur de la vitesse ou pas de vitesse basse trop stable.

Selon un second mode de mise en oeuvre de l'invention, on met en place dans l'unité roue, en tant que capteur de déplacement, deux capteurs magnétiques dont les directions de mesure du champ magnétique terrestre ne sont pas confondues. Le micro processeur de l'unité roue vérifie que les signaux générés par ces deux capteurs sont déphasés l'un par rapport à l'autre. S'il existe bien un déphasage entre les deux signaux, c'est que le véhicule est en déplacement. Dans ce cas le signal de déplacement est associé aux signaux délivrés par les capteurs de pression et de température (...etc.) pour former le signal unité roue envoyé à l'unité centrale. L'unité centrale traite alors de manière approfondie le signal reçu.

S'il n'existe pas de déphasage entre les signaux issus des deux capteurs, alors ces signaux ne sont pas représentatifs d'un déplacement mais sont des signaux parasites. Ils sont alors mémorisés en tant que signaux parasites dans la base de données de signaux parasites (s'ils ne sont pas déjà dans cette base) et ne sont pas traités de manière plus approfondie par le calculateur de l'unité roue afin de ne pas utiliser les ressources de la batterie pour des calculs inutiles.

On notera que selon la présente invention il ne suffit pas que l'on détecte une variation du champ magnétique terrestre en provenance du (ou des) capteur(s) de l'unité roue pour en déduire que la roue est en mouvement. En effet le microprocesseur de l'unité roue confirme qu'il s'agit bien d'un mouvement réel du véhicule en vérifiant, en outre, que les signaux en provenance du capteur de déplacement sont corrélés avec la vitesse de rotation de la roue ou bien que les signaux en provenance des deux capteurs magnétiques sont déphasés l'un par rapport à l'autre.

Pour compléter cette confirmation, il est également possible de vérifier que ces signaux sont déphasés de manière stable et constante (correspondant à l'angle entre les axes de sensibilité des capteurs magnétiques). Ainsi on détermine par deux moyens distincts que le véhicule est en mouvement et ensuite l'unité centrale traite uniquement les signaux de déplacement doublement confirmés. On évite ainsi que l'unité centrale n'ait à traiter inutilement, des signaux parasités. L'énergie de la batterie est ainsi économisée.

Avantageusement pour mémoriser les signaux parasites dans la base de données des signaux parasites on mémorise certaines de leurs caractéristiques, comme par exemple leurs amplitudes et/ou la surface des courbes représentant ces signaux.

De manière avantageuse, la base de données répertoriant l'ensemble des signaux parasites et ainsi continuellement remise à jour, pendant toute la durée de vie du véhicule, même si pratiquement il est surtout utile de mémoriser les caractéristiques du dernier parasite détecté puisque c'est celui que l'on a le plus de chance de rencontrer à nouveau.

La présente invention concerne également un dispositif mettant en oeuvre le procédé selon l'invention. Selon un premier mode de réalisation, ce dispositif comporte un seul capteur magnétique.

Selon un second mode de réalisation, le dispositif selon l'invention comporte deux capteurs magnétiques de champ terrestre, dont l'axe de mesure n'est pas confondu. Ces capteurs sont adaptés pour mesurer les variations du champ magnétique terrestre engendrées par la rotation de la roue qui les porte. Ces capteurs peuvent être de tous types. Il peut s'agir de simple bobines, mais aussi de capteurs à effet Hall, de capteurs à résonance magnétique géante, de capteur à résonnances tunelo-magnétiques...etc....

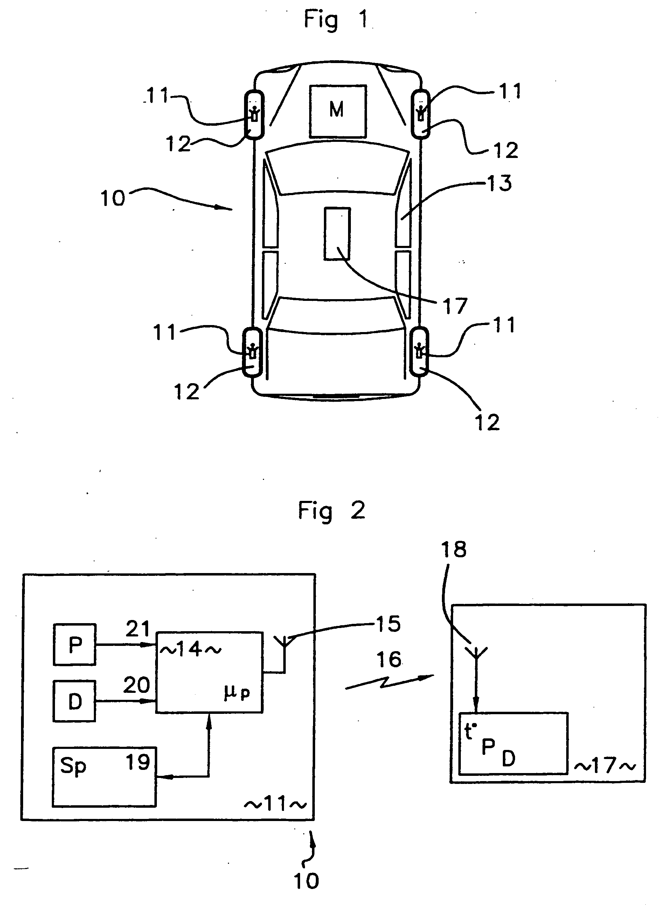

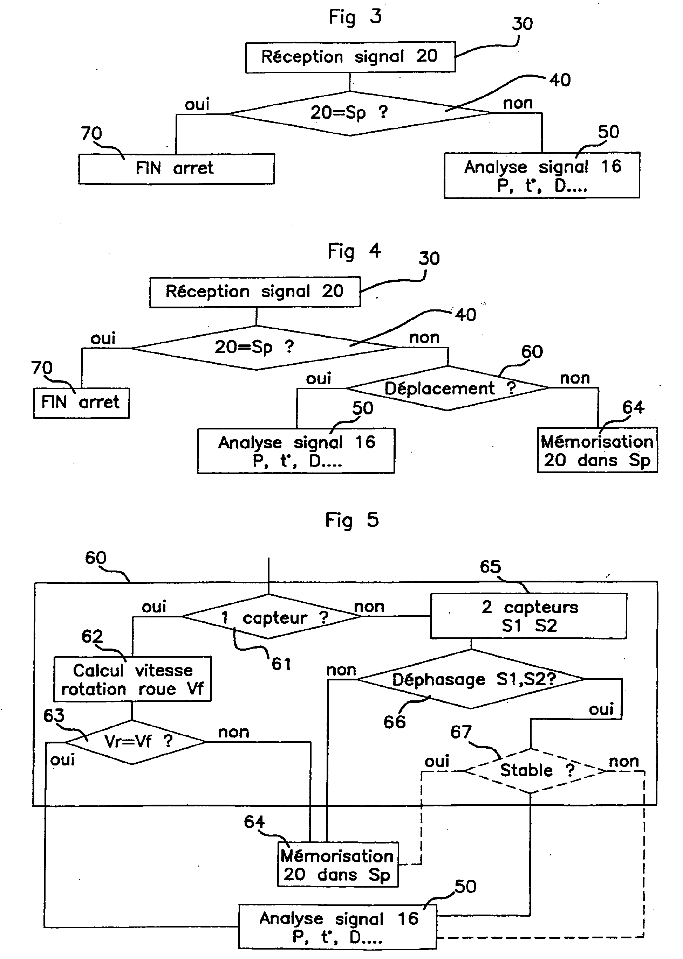

D'autres objets, caractéristiques et avantages de la présente invention apparaîtront à la lecture de la description qui va suivre, à titre d'exemple non limitatif, et en référence aux dessins annexés dans lesquels :
- **la** **figure 1**, est une vue schématique d'un véhicule automobile muni d'une unité roue et d'une unité centrale habitacle,
- **la** **figure 2**, est une vue schématique d'une unité roue et d'une unité centrale selon l'invention,
- **la** **figure 3** est un logigramme illustrant le procédé de détection de déplacement de l'invention,
- **la** **figure 4** est un logigramme illustrant un procédé de détection de déplacement selon un premier mode de mise en oeuvre de l'invention, et
- **La** **figure 5** est un logigramme illustrant un second mode de mise en oeuvre du procédé de détection de déplacement selon l'invention.

Selon la forme de réalisation représentée aux figures 1 et 2, le dispositif 10 de détection de déplacement d'un véhicule 13 selon la présente invention comporte:
- une unité roue 11, placée dans chacune des roues 12, du véhicule 13, et
- une unité centrale 17 généralement disposée dans l'habitacle du véhicule.

Chaque unité roue 11 comporte (figure 2):
- au moins un capteur de pression P (et souvent également un capteur de température (non représenté)), générant un signal de pression 21,
- un capteur de déplacement D, constitué dans le cadre d'un premier mode de réalisation, par un capteur magnétique adapté pour mesurer les variations du champ magnétique terrestre. On rappelle en effet que lorsque la roue est immobile, le champ magnétique terrestre mesuré par le capteur de déplacement D est sensiblement constant. Par contre dés que la roue est entrainée en rotation, le capteur de déplacement D mesure des variations du champ magnétique terrestre (dues en fait au déplacement de la roue du véhicule dans le champ magnétique terrestre). Le capteur de déplacement émet un signal de déplacement 20 qui peut être soit un vrai signal de déplacement, soit un signal parasité perçu par le capteur de déplacement.
- un micro processeur 14 de traitement et de mise en forme des signaux 20 et 21 générés par les capteurs de pression et de déplacement,
- un moyen de mémorisation 19, associé au micro processeur 14. Ce moyen de mémorisation constitue une base de données de signaux parasites Sp, dont on enregistre les caractéristiques connues. Ces caractéristiques sont par exemple constituées par les amplitudes des différents signaux parasites ou bien les surfaces de leurs courbes représentatives, ou tout autre paramètre analogue.
- un moyen d'émission 15 d'un signal unité roue 16.

Le signal unité roue 16 (généré à partir, notamment, des signaux issus des capteurs de pression 21 et de déplacement 20) est émis par l'antenne 15 et est reçu par l'unité centrale 17, munie à cet effet de moyens de réception 18.

On rappelle que lorsque l'on utilise un capteur de champ magnétique terrestre pour détecter le déplacement d'un véhicule, le signal 20 issu d'un tel capteur peut facilement être perturbé par un grand nombre de signaux parasites Sp environnant. Le but de la présente invention est de ne pas envoyer toute variation du signal de déplacement de l'unité roue vers l'unité centrale pour traitement. On veut ainsi éviter que cette unité centrale ne traite inutilement un signal qui en fait n'est pas réellement représentatif d'un déplacement du véhicule.

On rappelle que les générateurs de signaux parasites sont en fait relativement fréquents et nombreux et sont d'autant plus perturbateurs que le véhicule est à l'arrêt. En effet dans ce cas le générateur perturbe en continu les moyens de détection de déplacement et le véhicule n'en finit pas de traiter inutilement des signaux qui n'ont rien à voir avec le déplacement du véhicule. De tels générateurs peuvent par exemple être constitués par une machine à laver ou un réfrigérateur placé dans le garage à coté du véhicule. Il peut également s'agir d'ondes électromagnétiques dues à la proximité d'une prise électrique (220V à 50 Hz ou à 60 Hz). Le véhicule peut également être perturbé à l'arrêt s'il est garé près d'un transformateur électrique ou près d'une ligne à haute tension, ou à proximité d'une ligne de tramway... Les perturbations induites par de tels générateurs de parasites sont relativement connues et sont mémorisées dans la base de données 19.

Le procédé de détection du déplacement d'un véhicule selon l'invention consiste alors à (figure 3):
- recueillir (étape 30) au niveau du micro processeur 14 le signal de déplacement 20,
- comparer (étape 40) ce signal de déplacement 20 avec les signaux parasites Sp mémorisés dans le moyen de mémorisation 19, et
- envoyer le signal unité roue 16 (étape 50) vers l'unité centrale 17 pour traitement, uniquement si le signal de déplacement 20 incorporé dans le signal d'unité roue 16 est absent de la base de données regroupant les signaux parasites Sp connus. Le traitement effectué par l'unité centrale 17 consiste par exemple à extraire du signal unité roue 16, la pression P, la température t°, le déplacement D .... pour analyse par un dispositif de surveillance de la pression des pneus.

On notera que seuls les signaux unité roue 16 représentatifs d'un déplacement réel du véhicule sont traités par l'unité centrale. On évite ainsi d'utiliser les moyens de traitement de l'unité centrale pour des signaux qui ne sont pas représentatifs d'un mouvement réel du véhicule.

Si le signal de déplacement 20 (étape 40) est dans la base de données des signaux parasites Sp alors le microprocesseur 14 n'envoie pas le signal 16 et attend un prochain signal (étape 70). Dans ce cas, le véhicule est alors considéré comme étant à l'arrêt et seules les variations importantes de pression sont analysées.

De préférence (figure 4) selon un premier mode de réalisation lorsque le signal de déplacement 20 n'est pas mémorisé (étape 40) dans la base de données des signaux parasites Sp on vérifie (étape 60), préalablement à son envoi vers l'unité centrale 17, qu'il s'agit bien d'un signal représentatif d'un déplacement du véhicule. Si le signal est bien représentatif d'un déplacement alors il est envoyé vers l'unité centrale 17 du véhicule (étape 50) pour analyse approfondie. Par contre si le signal de déplacement 20 n'est pas représentatif d'un déplacement il est mémorisé (étape 64) dans la base de données de signaux parasites. En effet dans ce cas le signal de déplacement 20 est un signal parasite non encore mémorisé dans la base de données 19 des signaux parasites.

Il est ainsi possible de maintenir continument à jour la base de données des signaux parasites rencontrés par le véhicule.

Pour vérifier si le signal de déplacement 20 est bien un signal représentatif d'un déplacement du véhicule, le micro processeur 14 procède différemment lorsque le capteur de déplacement est un capteur magnétique ou bien lorsque ce capteur de déplacement est constitué par une paire de capteurs magnétiques.

En référence à la figure 5, lorsque le capteur de déplacement D est constitué par un seul capteur magnétique (étape 61), le micro processeur 14 calcule (étape 62) la vitesse de rotation de la roue Vf (telle que déduite de la fréquence nominale du champ magnétique). Le micro processeur 14 vérifie ensuite (étape 63) que la vitesse de rotation calculée Vf correspond à une vitesse de roue Vr plausible (par exemple on vérifie que la vitesse de rotation Vf ne varie pas trop brusquement ou bien n'est pas trop stable). S'il y a bien corrélation entre ces deux vitesses de rotation de la roue (Vf et Vr), le signal unité roue 16 est envoyé vers l'unité centrale 17 pour traitement (étape 50). S'il n'y a pas de corrélation entre les deux vitesses de rotations de la roue, on mémorise (étape 64) le signal de déplacement 20 dans la base de données des signaux parasites Sp.

Lorsque le capteur de déplacement D est constitué par une paire de capteurs magnétiques (étape 65), dont les directions de mesure du champ magnétique terrestre ne sont pas confondues (préférentiellement on peut utiliser deux capteurs avec des axes de mesure à 90°) le micro processeur 14 vérifie (étape 66), que les signaux S1 et S2 générés par ces deux capteurs sont déphasés l'un par rapport à l'autre. S'il existe bien un déphasage entre les deux signaux, c'est qu'il s'agit bien de signaux de déplacement. Dans ce cas le signal unité roue 16 (qui les intègre) est traité de manière approfondie par l'unité centrale 17 (étape 50). Sinon, ce ne sont pas des signaux de déplacement mais ce sont des signaux parasites. Ils sont alors mémorisés dans la mémoire 19 (étape 64) en tant que signaux parasites dans la base de données de signaux parasites (s'ils ne sont pas déjà dans cette base).

La figure 5, illustre également en pointillés une variante de mise en oeuvre du procédé selon l'invention, utilisant deux capteurs magnétiques en tant que capteurs de déplacement. Selon cette variante, lorsqu'un déphasage a été détecté (étape 66) entre les signaux S1 et S2, on vérifie en outre que ce déphasage est stable (étape 67). Si oui, les signaux S1 et S2 (constituant le signal de déplacement 20) sont mémorisés dans la base de données des signaux parasites (étape 64) sinon l'analyse approfondie du signal unité roue incorporant ces signaux est effectuée (étape 50) par l'unité centrale.

Cette variante de réalisation propose une étape supplémentaire (étape 67) de vérification de la continuité et de la stabilité de chaque signal (S1, S2). Cette étape supplémentaire permet de confirmer quasi certainement le déplacement du véhicule 10. En effet, la fréquence de chaque signal varie suivant la vitesse du véhicule. Un signal stable en fréquence et/ou sans discontinuité (par exemple: trop purement sinusoïdal) ne peut être caractéristique du déplacement d'un véhicule (dont la vitesse varie et dont les masses métalliques déforment l'uniformité du champ magnétique terrestre autour du véhicule). Cette étape supplémentaire (étape 67) permet alors d'éviter des erreurs lors de l'interprétation du déplacement du véhicule 13. En effet, lorsque le véhicule 13 est à l'arrêt, si on lui superpose un champ local tournant à proximité, on risque d'induire un déphasage entre les deux signaux (S1, S2) de même type que celui induit par une roue 12 en rotation. La détermination du déplacement du véhicule 13 pourrait ainsi être faussée. L'étape supplémentaire 67 permet de résoudre ce problème qui, il est vrai, est peu fréquent.

Ainsi, la présente invention permet de limiter considérablement le nombre d'analyses complètes et périodiques de chaque signal (S1, S2) en provenance des capteurs magnétiques grâce à deux étapes consécutives et essentielles :
- une première étape appelée "condition d'identité" (étape 40) qui permet de déterminer, à partir d'une base de données 19 de signaux parasites Sp connus, si chaque signal S1, S2 (ou 16) est déjà connu et répertorié comme un signal parasite. Si tel est le cas, l'analyse est stoppée. Le véhicule est alors considéré comme étant à l'arrêt.
- Une seconde étape appelée "analyse du déphasage" (étape 66) entre les deux signaux (S1, S2).

Bien entendu, la présente invention ne se limite pas à la forme de réalisation préférentielle décrite ci-dessus à titre d'exemple non limitatif. Par exemple, l'étape 67 de vérification de la continuité et de la stabilité de chaque signal (S1, S2) peut être réalisée préalablement à l'analyse du déphasage (étape 66) entre les deux signaux (S1, S2).

## Revendications

1. Procédé de détection du déplacement d'un véhicule (13) :
comprenant au moins une unité roue (11) équipée d'un moyen de détection de déplacement (D), générant un signal de déplacement (20) lorsque le véhicule est en mouvement, **caractérisé en ce qu'**il consiste à :
- établir (19) un ensemble de caractéristiques de signaux parasites (Sp), induits par des générateurs de parasites, perturbant les moyens de détection de déplacement (D), pouvant être interprétés par l'unité roue (11) comme étant une indication d'une mise en mouvement du véhicule (13) et mémorisés dans l'unité roue (11),
- comparer chaque signal de déplacement (20) généré par le moyen de détection de déplacement (D) avec l'ensemble (19) des signaux parasites (SP) mémorisés, et
- envoyer vers une unité centrale (17) du véhicule (13) que des signaux unité roue (16) générés par le moyen de détection de déplacement (D) et non présents dans l'ensemble des signaux parasites (Sp) afin d'éviter que l'unité centrale (17) ne traite inutilement un signal qui en fait n'est pas représentatif d'un déplacement du véhicule (13).

2. Procédé de détection selon la revendication 1, **caractérisé en ce que** pour établir que le signal unité roue (16) est représentatif d'un déplacement du véhicule:
- on place dans l'unité roue deux capteurs magnétiques (D) dont les directions de mesure du champ magnétique ne sont pas confondues, les dits capteurs (D) délivrant deux signaux de déplacement (S1, S2),
- un micro processeur (14) placé dans l'unité roue vérifie que les signaux (S1, S2) générés par les deux capteurs sont déphasés l'un par rapport à l'autre et,
- on en déduit que le signal d'unité roue (16) est bien représentatif d'un déplacement du véhicule, lorsque les signaux envoyés par les capteurs sont déphasés.

3. Procédé de détection de déplacement d'un véhicule selon l'une quelconque des revendications précédentes **caractérisé en ce que** pour établir l'ensemble (19) des caractéristiques des signaux parasites (Sp) on mémorise les signaux de déplacement (S1, S2) ne présentant pas de déphasage, en tant que signaux parasites (Sp).

4. Procédé selon la revendication 3, **caractérisé en ce que** la mémorisation des signaux parasites (Sp) consiste à mémoriser les amplitudes (A) et/ou surface des dits signaux parasites.

5. Dispositif de détection du déplacement d'un véhicule mettant en oeuvre le procédé selon l'une quelconque des revendications précédentes, le dit dispositif étant implanté dans une unité roue (11) d'un véhicule automobile (13), comportant
- un moyen de génération d'un signal de déplacement (20) lorsque le véhicule (13) est en mouvement, et étant **caractérisé en ce qu'**il comporte :
- un moyen de mémorisation (19) dans l'unité roue (11) d'un ensemble de caractéristiques de signaux parasites (Sp) induits par des générateurs de parasites, perturbant les moyens de détection de déplacement (D), pouvant être interprétés par l'unité roue (11) comme étant une indication d'une mise en mouvement du véhicule (13)
- un moyen de comparaison du signal de déplacement (20) et des signaux parasites (Sp), et
- un moyen d'émission vers l'unité centrale (17) du véhicule (13) des signaux unité roue (16) générés par le moyen de détection de déplacement (D) que lorsqu'ils sont différent des signaux parasites (Sp) mémorisés, c'est à dire représentatif d'un déplacement du véhicule (13),
- un moyen de traitement par une unité centrale (17) placée dans le véhicule (13), du signal unité roue (16).

6. Dispositif de détection de déplacement d'un véhicule selon la revendication 5, **caractérisé en ce que** l'unité roue (11) comporte deux capteurs magnétiques (D) disposés de telle sorte que leurs directions de mesure du champ magnétique ne soient pas confondues, et **en ce que** le moyen de vérification dans un micro processeur (14) de l'unité roue comporte un moyen de détermination d'un déphasage entre les signaux (S1 et S2) mesurés par les capteurs.

7. Dispositif de détection selon l'une quelconque des revendications 5 et 6, **caractérisé en ce que** le moyen de mémorisation (19) des signaux parasites est adapté pour mémoriser les amplitudes et / ou les surfaces des dits signaux parasites.

## Claims

1. Method for detecting the movement of a vehicle (13) comprising at least one wheel unit (11) equipped with a movement detection means (D), generating a movement signal (20) when the vehicle is in motion, **characterized in that** it consists in:
- establishing (19) a set of characteristics of interference signals (Sp), induced by interference generators, disturbing the movement detection means (D), that can be interpreted by the wheel unit (11) as being an indication of the vehicle (13) being set in motion and stored in the wheel unit (11),
- comparing each movement signal (20) generated by the movement detection means (D) with the set (19) of the interference signals (Sp) stored interference signals (Sp), and
- sending to a central unit (17) of the vehicle (13) only the wheel unit signals (16) generated by the movement detection means (D) and not present in the set of the interference signals (Sp) in order to avoid having the central unit (17) unnecessarily process a signal which in fact is not representative of a movement of the vehicle (13).

2. Detection method according to Claim 1, **characterized in that**, to establish that the wheel unit signal (16) is representative of a movement of the vehicle:
- two magnetic sensors (D) are placed in the wheel unit, the magnetic sensors having magnetic field measurement directions which are not the same, said sensors (D) delivering two movement signals (S1, S2),
- a microprocessor (14) placed in the wheel unit checks that the signals (S1, S2) generated by the two sensors are phase-shifted relative to one another and,
- deduction is made therefrom that the wheel unit signal (16) is indeed representative of a movement of the vehicle, when the signals sent by the sensors are phase-shifted.

3. Method for detecting movement of a vehicle according to any one of the preceding claims, **characterized in that**, to establish the set (19) of the characteristics of the interference signals (Sp), the movement signals (S1, S2) that do not exhibit any phase shift are stored as interference signals (Sp).

4. Method according to Claim 3, **characterized in that** the storage of the interference signals (Sp) consists in storing the amplitudes (A) and/or the surface of said interference signals.

5. Device for detecting the movement of a vehicle implementing the method according to any one of the preceding claims, said device being located in a wheel unit (11) of a motor vehicle (13), comprising:
- a means for generating a movement signal (20) when the vehicle (13) is in motion, and being **characterized in that** it comprises:
- means (19) for storing, in the wheel unit (11), a set of characteristics of interference signals (Sp) induced by interference generators, disturbing the movement detection means (D), that can be interpreted by the wheel unit (11) as being an indication of the vehicle (13) being set in motion,
- a means for comparing the movement signal (20) and the interference signals (Sp), and
- a means for transmitting, to the central unit (17) of the vehicle (13), wheel unit signals (16) generated by the movement detection means (D) only when they are different from the stored interference signals (Sp), that is to say, representative of a movement of the vehicle (13),
- a means for processing, by a central unit (17) placed in the vehicle (13), the wheel unit signal (16).

6. Device for detecting movement of a vehicle according to Claim 5, **characterized in that** the wheel unit (11) comprises two magnetic sensors (D) arranged so that their magnetic field measurement directions are not the same, and **in that** the checking means in a microprocessor (14) of the wheel unit comprises a means for determining a phase shift between the signals (S1 and S2) measured by the sensors.

7. Detection device according to any one of Claims 5 and 6, **characterized in that** the means (19) for storing the interference signals is adapted to store the amplitudes and/or the surfaces of said interference signals.

## Patentansprüche

1. Verfahren zur Erfassung der Bewegung eines Fahrzeugs (13), das mindestens eine Radeinheit (11) umfasst, die mit einem Mittel zur Erfassung der Bewegung (D) ausgestattet ist, das ein Bewegungssignal (20) erzeugt, wenn das Fahrzeug in Bewegung ist, **dadurch gekennzeichnet, dass** es aus Folgendem besteht:
- Erstellen (19) einer Gruppe von Eigenschaften von Störsignalen (Sp), die von Störsignalgeneratoren hervorgerufen werden, die Mittel zur Erfassung der Bewegung (D) stören, von der Radeinheit (11) als Hinweis auf ein Anfahren des Fahrzeugs (13) ausgelegt werden können und in der Radeinheit (11) gespeichert werden,
- Vergleichen jedes Bewegungssignals (20), das von dem Mittel zur Erfassung der Bewegung (D) erzeugt wird, mit der Gruppe (19) der gespeicherten Störsignale (SP), und
- Senden von Radeinheitssignalen (16), die von dem Mittel zur Erfassung der Bewegung (D) erzeugt werden und nicht in der Gruppe der Störsignale (Sp) enthalten sind, an eine Zentraleinheit (17) des Fahrzeugs, um zu verhindern, dass die Zentraleinheit (17) unnötigerweise ein Signal, das in Wirklichkeit keine Bewegung des Fahrzeugs (13) darstellt, verarbeitet.

2. Verfahren zur Erfassung nach Anspruch 1, **dadurch gekennzeichnet, dass** zum Feststellen, dass das Radeinheitssignal (16) eine Bewegung des Fahrzeugs darstellt:
- in der Radeinheit zwei Magnetsensoren (D) platziert werden, deren Richtung zum Messen des Magnetfelds sich nicht deckt, wobei die Sensoren (D) zwei Bewegungssignale (S1, S2) abgeben,
- ein Mikroprozessor (14), der in der Radeinheit platziert ist, nachprüft, dass die Signale (S1, S2), die von den beiden Sensoren erzeugt werden, zueinander phasenverschoben sind, und
- daraus abgeleitet wird, dass das Radeinheitssignal (16) eine Bewegung des Fahrzeugs darstellt, wenn die Signale, die von den Sensoren gesendet werden, phasenverschoben sind.

3. Verfahren zur Erfassung der Bewegung eines Fahrzeugs nach einem der vorhergehenden Ansprüche, **dadurch gekennzeichnet, dass** zum Erstellen der Gruppe (19) der Eigenschaften der Störsignale (Sp) die Bewegungssignale (S1, S2), die keine Phasenverschiebung aufweisen, als Störsignale (Sp) gespeichert werden.

4. Verfahren nach Anspruch 3, **dadurch gekennzeichnet, dass** das Speichern der Störsignale (Sp) darin besteht, die Amplitude (A) und/oder die Fläche der Störsignale zu speichern.

5. Vorrichtung zur Erfassung der Bewegung eines Fahrzeugs, mit der das Verfahren nach einem der vorhergehenden Ansprüche durchgeführt wird, wobei die Vorrichtung in einer Radeinheit (11) eines Kraftfahrzeugs (13) eingebaut ist, umfassend:
- ein Mittel zum Erzeugen eines Bewegungssignals (20), wenn das Fahrzeug (13) in Bewegung ist, und **dadurch gekennzeichnet, dass** sie Folgendes umfasst:
- ein Mittel zum Speichern (19), in der Radeinheit (11), einer Gruppe von Eigenschaften von Störsignalen (Sp), die von Störsignalgeneratoren hervorgerufen werden, die Mittel zur Erfassung der Bewegung (D) stören, von der Radeinheit (11) als Hinweis auf ein Anfahren des Fahrzeugs (13) ausgelegt werden können,
- ein Mittel zum Vergleichen des Bewegungssignals (20) und der Störsignale (Sp) und
- ein Mittel zum Senden von Radeinheitssignalen (16), die von dem Mittel zur Erfassung der Bewegung (D) erzeugt werden, an die Zentraleinheit (17) des Fahrzeugs (13), wenn sie sich von den gespeicherten Störsignalen (Sp) unterscheiden, das heißt eine Bewegung des Fahrzeugs (13) darstellen,
- ein Mittel zum Verarbeiten des Radeinheitssignals (16) mit einer Zentraleinheit (17), die im Fahrzeug (13) platziert ist.

6. Vorrichtung zur Erfassung der Bewegung eines Fahrzeugs nach Anspruch 5, **dadurch gekennzeichnet, dass** die Radeinheit (11) zwei Magnetsensoren (D) umfasst, die derart angeordnet sind, dass ihre Richtung zum Messen des Magnetfelds sich nicht deckt und **dadurch**, dass das Mittel zum Nachprüfen in einem Mikroprozessor (14) der Radeinheit ein Mittel zum Bestimmen einer Phasenverschiebung zwischen den Signalen (S1 und S2), die von den Sensoren gemessen werden, umfasst.

7. Vorrichtung zur Erfassung nach einem der vorhergehenden Ansprüche 5 und 6, **dadurch gekennzeichnet, dass** das Mittel zum Speichern (19) der Störsignale dafür eingerichtet ist, die Amplitude und/oder die Fläche der Störsignale zu speichern.
